# EUROPEAN PATENT APPLICATION

(11) **EP 4 207 334 A1**
(43) Date of publication of application: **05.07.2023**
(21) Application number: 22165460.1
(22) Date of filing: 30.03.2022
(51) Int. Cl.: H01M 4/04, H01M 4/134, H01M 4/1395, H01M 4/62, H01M 10/052, H01M 4/02

(54) **METHOD OF PREPARING SLURRY FOR ANTI-DENDRITIC LITHIUM ANODE COATING AND BATTERY MADE THEREOF**

(30) Priority: 29.12.2021 CN 202111632136
(71) Applicant: SolidEdge Solution Inc., Hsinchu 300 (TW); Hon Hai Precision Industry Co., Ltd., New Taipei 236 (TW)
(72) Inventor: CHEN, WEI-CHAO, 300 Hsinchu (TW); LAI, HONG-ZHENG, 300 Hsinchu (TW); CHANG, TSENG-LUNG, 300 Hsinchu (TW)
(74) Representative: Zaboliene, Reda

(57) **Abstract**

An anode passivation slurry of anti-dendritic lithium and a method of preparation are provided. The method comprises the steps of dissolving a divalent copper metal compound and a non-ionic polymer to obtain a first solution, dissolving trimesic acid to obtain a second solution, and mixing the first and second solutions to obtain a copper-based metal-organic framework. The dried precursor are mixed with ionic liquid, which has contained a first lithium salt, and then dried to obtain an anion impregnated copper-based metal-organic framework. Thereafter, an anion impregnated copper-based metal-organic framework, a second lithium salt, polymer materials, and a second solvent are mixed to obtain the anode passivation slurry. The anode passivation slurry homogenizes the concentration of conduction of lithium ions and improves ionic conductivity, reducing the formation of lithium dendrites, and improving the cycle life of batteries. A battery with the anode passivation slurry dried on an anode is also disclosed.

## Description

### FIELD

The present application relates to the field of batteries, and more particularly to an anode passivation slurry and a preparation method thereof, and a battery comprising an anode coating formed by drying the anode passivation slurry.

### BACKGROUND

Lithium metal anode materials are currently regarded as the most promising anode materials due to their high theoretical electrical capacity per gram. However, in practical applications, lithium metal anode materials suffer from formation of uneven lithium dendrites during cycling, which can easily lead to battery short-circuits and catching fire.

### SUMMARY

In view of the above, the present disclosure proposes a method of preparing an anode passivation slurry with anti-dendritic lithium.

In addition, it is also necessary to propose a battery including the anode passivation slurry.

An embodiment of the present disclosure provides a method of preparing an anode passivation slurry, comprising the following steps:
dissolving a divalent copper metal compound and a non-ionic polymer in a first solvent to obtain a first solution, dissolving trimesic acid in the first solvent to obtain a second solution, mixing the second solution and the first solution and reacting at room temperature to obtain a precursor with a plurality of pores;
drying the precursor;
mixing an ionic liquid and a first lithium salt and then drying to obtain a mixture;
mixing the precursor after drying and the mixture uniformly, and baking at 100°C~150°C in a vacuum environment, so that anions in the mixture diffuse into the plurality of pores of the precursor to obtain an ionic liquid impregnated copper-based metal-organic framework (IL@Cu-MOF); and
mixing the IL@Cu-MOF, a second lithium salt, a polymer material, and a second solvent uniformly to obtain the anode passivation slurry.

Non-ionic polymers are added during the synthesis of IL@Cu-MOF. Non-ionic polymers can disperse IL@Cu-MOF particles, control particle size, and control the size of pores, thus the anions of the ionic liquid and the lithium salt may have enough steric space to smoothly enter the pores in the IL@Cu-MOF. The IL@Cu-MOF filled with anions forms a continuous channel with electric dipole effect on lithium ions. The attraction of this electric dipole effect promotes the rapid transfer of lithium ions in the continuous channel, homogenizing the conduction concentration of lithium ions, and increasing the ionic conductivity, thereby inhibiting the formation of lithium dendrites. In addition, the high stress of the anode coating formed by drying the anode passivation slurry prepared from the IL@Cu-MOF and the polymer material can reduce the damage of lithium dendrites to the battery structure, reduce the risk of lithium dendrites penetration in batteries, and improve the cycle life of battery.

According to an embodiment, the non-ionic polymer comprises at least one of polyvinyl alcohol, polyquaternium, and polyvinylpyrrolidone. Non-ionic polymers can limit and homogenize the particle size of IL@Cu-MOF during the synthesis of IL@Cu-MOF. In addition, the non-ionic polymer does not participate in the reaction in the synthesis of IL@Cu-MOF, but forms a micelle encapsulation in the first solvent, which is then filled into the IL@Cu-MOF. The non-ionic polymer can be removed during washing process, leaving behind the hierarchical nanopores created by the micelle encapsulation. The nanopores accommodate anions to form microchannels which can produce an electric dipole effect on lithium ions, thereby homogenizing the diffusion rate and concentration of lithium ions.

According to an embodiment, a molecular weight of the non-ionic polymer is 4,000 to 100,000, a concentration of the non-ionic polymer in the mixed solution of the first solution and the second solution is 0.05 mM to 0.08 mM. The non-ionic polymer forms a micelle encapsulation in the first solvent, and the size of the micelle encapsulation is proportional to the molecular weight and the concentration of the non-ionic polymer. The molecular weight of the non-ionic polymer is 4,000-100,000, and the concentration of the non-ionic polymer is 0.05 mM~0.08 mM, in this way, pores with suitable size can be formed for the smooth diffusion of anions.

According to an embodiment, the ionic liquid comprises at least one of 1-ethyl-3-methylimidazole bis(trifluoromethylsulfonyl)imide, 1-butyl-3-methylimidazole bis(trifluoromethylsulfonyl)imide, and 1-octyl-3-methylimidazole bis(trifluoromethylsulfonyl)imide. The cations of the above ionic liquids all have long carbon chain structures, which cannot enter the pores due to their bulky size and steric structural barriers. The anions (TFSI⁻) can be diffused and filled into the pores smoothly, and due to their linear structure, the anions trapped in the pores cannot easily escape. Thus, the copper-based metal-organic framework filled with anions (IL@Cu-MOF) can form a continuous channel with an electric dipole effect on lithium ions.

According to an embodiment, the first lithium salt includes at least one of lithium bis(trifluoromethanesulfonyl)imide, lithium bis(fluorosulfonyl)imide, lithium tetrafluoroborate, and lithium hexafluorophosphate, the second lithium salt includes at least one of lithium bis(trifluoromethanesulfonyl)imide, lithium bis(fluorosulfonyl)imide, lithium tetrafluoroborate, and lithium hexafluorophosphate. The first lithium salt and the second lithium salt may be the same or different. Adding lithium salts to the anode passivation slurry can increase the concentration of lithium ions and thus increase the conductivity of lithium ions, and allow more anions (e.g., TFSI⁻ ) to enter the pores of the copper-based metal-organic framework and increase the conduction properties in the continuous channel.

According to an embodiment, the polymer material comprises a mixture of a first macromolecule and a second macromolecule, the first macromolecule is selected from at least one of polyvinylidene fluoride and polyethylene oxide, and the second macromolecule is selected from at least one of polymethyl methacrylate, polypyrrole, and poly(2-ethyl-2-oxazoline). The polymer material is used to disperse the copper-based metal-organic framework filled with anions (IL@Cu-MOF), improve the surface coverage of the IL@Cu-MOF, and reduce agglomeration, thereby reducing the accumulation or precipitation of the IL@Cu-MOF particles. In addition, the polymer material may also regulate the viscosity of the anode passivation slurry.

According to an embodiment, the first solvent comprises at least one of methanol, ethanol, and water.

According to an embodiment, the second solvent comprises at least one of N-methylpyrrolidone and N,N-dimethylacetamide.

According to an embodiment, the divalent copper metal compound comprises at least one of copper nitrate, copper acetate, and copper sulfate.

The present application also provides an anode passivation slurry prepared by the above-mentioned method. The anode passivation slurry comprises the following components by mass percentage: ionic liquid impregnated copper-based metal-organic frameworks 1-5 wt%; a second lithium salt 5-20 wt%; a polymer materials 10-20 wt%; and the remainder is a second solvent.

According to an embodiment, a particle size of the ionic liquid impregnated copper-based metal-organic frameworks is 0.1 µm to 0.7 µm, a specific surface area of the ionic liquid impregnated copper-based metal-organic frameworks is 700 m²/g to 1300 m²/g.

According to an embodiment, the ionic liquid impregnated copper-based metal-organic frameworks have a plurality of pores, and a size of the plurality of pores ranges from 0.6 nm to 1.6 nm.

The present application also provides a battery, and the battery comprises an anode electrode comprising a negative current collector, a negative electrode active material layer disposed on a surface of the negative current collector, and an anode coating disposed on a surface of the negative electrode active material layer, wherein the anode coating is dried from the above-mentioned anode passivation slurry.

In the present application, during the synthesis of IL@Cu-MOF, nanopores compatible with anions (TFSI) are formed by micelle encapsulation formed by non-ionic polymers, and the pores can adsorb anions (TFSI⁻) to form nano-scale continuous channels, which homogenize the conduction concentration of lithium ions and improve the ionic conductivity, thus reducing the formation of lithium dendrites. In addition, the high stress of the anode coating formed by drying the anode passivation slurry prepared from IL@Cu-MOF can reduce damage caused by lithium dendrites to the battery structure and improve the cycle life of battery.

### BRIEF DESCRIPTION OF THE DRAWINGS

Implementations of the present disclosure will now be described, by way of embodiments only, with reference to the attached figures.
FIG. 1 is a scanning electron microscope (SEM) image of an anode electrode with the anode passivation slurry prepared in Example 1 of the present disclosure applied thereon as a coating.
FIG. 2 shows voltage curves of half cells prepared in Example 1, in Example 2, and in a Comparative Example.

The following detailed description will further describe the embodiments of the present application with reference to the above drawings.

### DETAILED DESCRIPTION

Unless otherwise defined, all technical and scientific terms used herein have the same meaning as commonly understood by persons skill in the art. The terms used herein are only for the purpose of describing specific embodiments, and not intended to limit the embodiments of the present application.

In this application, descriptions such as "first", "second" etc. are only used for description purposes and should not be understood as indicating or implying their relative importance or implying the number of indicated technical features. Thus, a feature defined as "first" and "second" may expressly or implicitly include at least one of that features. In the description of the present application, "plurality" means more than one unless expressly and specifically defined otherwise.

Some embodiments of the present application will be described in detail below with reference to the drawings. The following embodiments and features of the embodiments may be combined with each other in the absence of conflict.

An embodiment of the present disclosure provides a method of preparing an anode passivation slurry, comprising the following steps:
S1: dissolving copper nitrate (Cu(NO₃)₂) and a non-ionic polymer in a first solvent to obtain a first solution; then dissolving trimesic acid (also known as benzene-1,3,5-tricarboxylic acid or H3BTC, CAS No.: 554-95-0, molecular formula: C₉H₆O₆) in the first solvent to obtain a second solution; mixing the second solution with the first solution at room temperature (25°C ± 5°C) to obtain a precursor with multiple pores. The chemical equation is: 3 Cu(NO₃)₂+2 C₉H₆O₆⇆C₁₈H₆Cu₃O₂+6 HNO₃ .

It can be understood that copper nitrate (Cu(NO₃)₂) can be replaced with copper nitrate trihydrate (Cu(NO₃)₂ • 3H₂O), copper acetate (Cu₂(CH₃COO)₄), or copper sulfate (CuSO₄). After the reaction is completed, the reaction product can be obtained by centrifuging, and then the products may be washed several times with the first solvent. The precursor described in this application is a copper-based metal-organic framework (Cu-MOF) before filling with anions, and the structure of the precursor is roughly the same as the periodic network structure of a metal-organic framework (MOF) synthesized by an ordinary hydrothermal method. The metal-organic framework (MOF) refers to crystalline porous materials with periodic network structures formed by self-assembly of transition metal ions and organic ligands.

S2: drying the precursor to remove moisture.

The specific drying method can be as follows: after precursor particles are ground into powder, baking the precursor powder at 120°C in a vacuum environment for 6h to 8h. When the color of the precursor powders changes from light blue to purple, it indicates completion of the drying process.

S3: mixing an ionic liquid and a first lithium salt and then drying to obtain a mixture.

In some embodiments, the ionic liquid may be mixed with the first lithium salt in a molar ratio of 8:2. The specific method of drying may be: baking at 120°C in a vacuum environment for 6h~8h to remove moisture. The drying in step S3 may be performed simultaneously with the drying in step S2.

S4: mixing the dried precursor and the mixture uniformly, and then baking at 100°C~150°C in a vacuum environment, so that anions in the mixture diffuse into the pores of the precursor, to obtain an ionic liquid impregnated copper-based metal-organic framework (IL@Cu-MOF).

In some embodiments, the dried precursor and the mixture are uniformly mixed by ball milling, and the baking time may be 12 hours. In the present application, the IL@Cu-MOF is a copper-based metal-organic framework filled with anions.

S5: mixing the IL@Cu-MOF, a second lithium salt, a polymer material, and a second solvent uniformly to obtain the anode passivation slurry.

In some embodiments, the IL@Cu-MOF, the second lithium salt, the polymer material and the second solvent may be stirred and mixed by a magnet or a slurry mixing machine.

It can be understood that the numbering of the steps is intended to describe the specific preparation method clearly and is not intended to limit the sequence of the steps. For example, the drying in step S2 and the drying in step S3 may also be performed simultaneously.

Non-ionic polymers are added during the synthesis of IL@Cu-MOF. Non-ionic polymers can disperse IL@Cu-MOF particles, control particle size, and control the size of pores, thus the anions of the ionic liquid and the lithium salt may have enough steric space to smoothly enter the pores in the IL@Cu-MOF. The IL@Cu-MOF filled with anions forms a continuous channel with electric dipole effect on lithium ions. The attraction of this electric dipole effect promotes the rapid transfer of lithium ions in the continuous channel, homogenizing the conduction concentration of lithium ions, and increasing the ionic conductivity, thereby inhibiting the formation of lithium dendrites. In addition, the high stress of the anode coating formed by drying the anode passivation slurry prepared from the IL@Cu-MOF and the polymer material can reduce the damage of lithium dendrites to the battery structure, reduce the risk of lithium dendrites penetration in batteries, and improve the cycle life of battery.

In some embodiments, the non-ionic polymer includes at least one of polyvinyl alcohol (PVA), polyquaternium, and polyvinylpyrrolidone (PVP). Non-ionic polymers can limit and homogenize the particle size of IL@Cu-MOF during the synthesis of IL@Cu-MOF. In addition, the non-ionic polymer does not participate in the reaction in the synthesis of IL@Cu-MOF, but forms a micelle encapsulation in the first solvent, which is then filled into the IL@Cu-MOF. The non-ionic polymer can be removed during washing process, leaving behind the hierarchical nanopores created by the micelle encapsulation. Therefore, the IL@Cu-MOF described in this application is a hierarchically porous IL@Cu-MOF (HP-IL@Cu-MOF). The pores accommodate anions to form microchannels which can produce an electric dipole effect on lithium ions, thereby homogenizing the diffusion rate and concentration of lithium ions.

Further, the molecular weight of the non-ionic polymer is 4,000-100,000, and the concentration of the non-ionic polymer in the mixed solution of the first solution and the second solution is 0.05 mM~0.08 mM (mmol/L). The non-ionic polymer forms a micelle encapsulation in the first solvent, and the size of the micelle encapsulation is proportional to the molecular weight and the concentration of the non-ionic polymer. The molecular weight of the non-ionic polymer is 4,000-100,000, and the concentration of the non-ionic polymer is 0.05 mM~0.08 mM, in this way, pores with suitable size can be formed for the smooth diffusion of anions. In this embodiment, the particle size of the formed pores is 0.6 nm to 1.6 nm, preferably 0.8 nm. The molecular size of the anion (TFSI⁻) is about 0.8 nm, which is suitable for diffusion and filling into the pores of IL@Cu-MOF.

In some embodiments, the ionic liquid includes at least one of 1-ethyl-3-methylimidazole bis(trifluoromethylsulfonyl)imide, 1-butyl-3-methylimidazole bis(trifluoromethylsulfonyl)imide, and 1-octyl-3-methylimidazole bis(trifluoromethylsulfonyl)imide. Ionic liquids refer to salts that are liquid at or near room temperature and are completely composed of anions and cations, also known as low-temperature molten salts, generally composed of organic cations and inorganic or organic anions.

In relation to 1-ethyl-3-methylimidazole bis(trifluoromethylsulfonyl)imide, referred to as EMIM-TFSI, composed of cation EMIM⁺ and anion TFSI⁻, CAS No. is 174899-82-2, molecular formula is C₈F₆H₁₁N₃O₄S₂, and the structure formula is as follows:

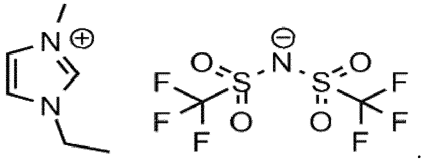

In relation to 1-butyl-3-methylimidazole bis(trifluoromethylsulfonyl)imide, referred to as HMIM-TFSI, composed of cation HMIM⁺ and anion TFSI⁻, CAS No. is 174899-83-3, molecular formula is C₈H₁₅N₂C₂F₆NO₄S₂, and the structure formula is as follows:

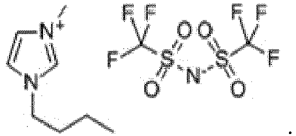

In relation to 1-octyl-3-methylimidazole bis(trifluoromethanesulfonyl)imide, referred to as OMIM-TFSI, composed of cation OMIM⁺ and anion TFSI⁻, CAS No. is 862731-66-6, and the structural formula is as follows:

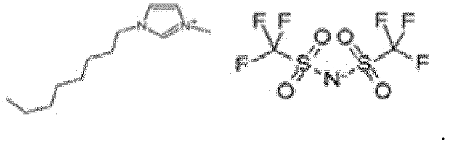

The cations (EMIM⁺, HMIM⁺, and OMIM⁺) of the above ionic liquids all have long carbon chain structures, which cannot enter the pores due to their bulky size and steric structural barriers. The anions (TFSI⁻) can be diffused and filled into the pores smoothly, and due to their linear structure, the anions trapped in the pores cannot easily escape. Thus, the copper-based metal-organic framework filled with anions (IL@Cu-MOF) can form a continuous channel with an electric dipole effect on lithium ions.

In some embodiments, the first lithium salt includes at least one of lithium bis(trifluoromethanesulfonyl)imide (LiTFSI), lithium bis(fluorosulfonyl)imide (LiFSI), lithium tetrafluoroborate (LiBF4), and lithium hexafluorophosphate (LiPF₆), the second lithium salt includes at least one of lithium bis(trifluoromethanesulfonyl)imide (LiTFSI), lithium bis(fluorosulfonyl)imide (LiFSI), lithium tetrafluoroborate (LiBF4), and lithium hexafluorophosphate (LiPF₆). Lithium bis(trifluoromethanesulfonyl)imide (LiTFSI) is preferred. The first lithium salt and the second lithium salt may be the same or different. Adding lithium salts to the anode passivation slurry can increase the concentration of lithium ions and thus increase the conductivity of lithium ions, and allow more anions (*e.g.,* TFSI ⁻ ) to enter the pores of the copper-based metal-organic framework and increase the conduction properties in the continuous channel.

In some embodiments, the polymer material includes a mixture of a first macromolecule and a second macromolecule. Further, the first macromolecule is selected from at least one of polyvinylidene fluoride (PVDF) and polyethylene oxide (PEO), and the second macromolecule is selected from at least one of polymethyl methacrylate (PMMA), polypyrrole (PPY), and poly(2-ethyl-2-oxazoline). For example, the polymer material may be a mixture of polyvinylidene fluoride and polymethyl methacrylate in a mass ratio of 7:1.

The polymer material is used to disperse the copper-based metal-organic framework filled with anions (IL@Cu-MOF), improve the surface coverage of the IL@Cu-MOF, and reduce agglomeration, thereby reducing the accumulation or precipitation of the IL@Cu-MOF particles. In addition, the polymer material may also regulate the viscosity of the anode passivation slurry.

In some embodiments, the first solvent includes at least one of methanol, ethanol, and water.

In some embodiments, the second solvent includes at least one of N-methylpyrrolidone (NMP) and N,N-dimethylacetamide (DMAC).

The present application also provides an anode passivation slurry, comprising the following components by mass percentage: an ionic liquid impregnated copper-based metal-organic framework 1-5 wt%; a second lithium salt 5-20 wt%; a polymer material 10-20 wt%; and the remainder is a second solvent.

Ionic liquid impregnated copper-based metal-organic framework (IL@Cu-MOF) is used to support lithium salt anions and form nanoscale continuous channels to accelerate and homogenize the conduction of lithium ions in the anode interface of batteries. The second lithium salt is used to increase the conductivity of lithium ions of the anode coating formed after the anode passivation slurry is dried, and allow more anions (e.g., TFSI⁻) to enter the pores of the copper-based metal-organic frameworks and increase their conductivity in the continuous channel. The polymer material is used to reduce the accumulation or precipitation of IL@Cu-MOF particles, and to regulate the viscosity of the anode passivation slurry. The second solvent is used to dissolve each of the above-mentioned solutes.

In some embodiments, the particle size of the IL@Cu-MOF is 0.1 µm to 0.7 µm, and the specific surface area of the IL@Cu-MOF is 700 m²/g to 1300 m²/g. Although the conventional copper-based metal-organic frameworks synthesized by an ordinary hydrothermal synthesis method have excellent specific surface area (about 2000 m²/g), the particle size is too large (about 10 µm), and it is easy to disperse unevenly when such copper-based metal-organic frameworks are formulated into the gel of the anode passivation slurry, resulting in uneven surface of the anode passivation slurry and failure of function. The particle size of the IL@Cu-MOF prepared in the present application is sub-micron level (0.1 µm to 0.7 µm), and the specific surface area is 700 m²/g to 1300 m²/g, which is conducive to uniform dispersion in the gel, so as to prepare an anode passivation slurry that is fit for purpose (reducing the formation of lithium dendrites).

In some embodiments, the IL@Cu-MOF has a plurality of pores, and the size of the pores ranges from 0.6 nm to 1.6 nm. This facilitate the diffusion of anions into the pores and the formation electric dipole channels, thus reducing the formation of lithium dendrites.

The present application will be further described below with reference to specific Examples and Comparative examples.

### Example 1

S1: 0.9 g Cu(NO₃)₂ and 0.6 g polyvinylpyrrolidone were dissolved in 50 mL methanol, and stirred for 10 minutes to obtain a first solution. 0.43 g trimesic acid was dissolved in 50 mL methanol and stirred for 10 minutes to obtain a second solution. The second solution was poured into the first solution, and the mixture was reacted at room temperature for 24 hours, and then the reaction mixture was transferred to a centrifuge and centrifuged at 8000 rpm for 5 minutes to obtain a reaction product. The reaction product was washed three times with methanol to obtain a precursor.

S2: The precursor particles were ground into powder, and then the powder was baked in a vacuum oven at 120 °C for 6 h to 8 h to remove moisture. Drying was stopped when the color of the precursor powder changed from light blue to purple.

S3: 1-butyl-3-methylimidazole bis(trifluoromethylsulfonyl)imide (HMIM-TFSI, ionic liquid) with lithium bis(trifluoromethanesulfonyl)imide (LiTFSI, first lithium salt) were mixed in each other in a molar ratio of 8:2 and baked in a vacuum oven at 120 °C for 6 h to 8 h to remove moisture, to obtain a mixture. The drying in step S2 and step S3 can be performed simultaneously.

S4: The dried precursor and the dried mixture were uniformly mixed by ball milling, then transferred to a vacuum oven for 12 hours, the anions (TFSI⁻) can diffuse into the pores under the condition of vacuum baking to obtain a IL@Cu-MOF.

S5: The IL@Cu-MOF, lithium bis(trifluoromethanesulfonyll)imide (LiTFSI, second lithium salt), and a polymer material were dissolved in 20 mL N-methylpyrrolidone, and stirred with a magnet for about 2 hours to obtain an anode passivation slurry. In the anode passivation slurry, the mass percentage of IL@Cu-MOF in the anode passivation slurry is 1%, the mass percentage of lithium bis(trifluoromethanesulfonyl)imide (second lithium salt) is 20%, and the mass percentage of polymer material is 10%. The polymer material is a mixture of polyvinylidene fluoride and polymethyl methacrylate, and the mass ratio of polyvinylidene fluoride and polymethyl methacrylate is 7:1.

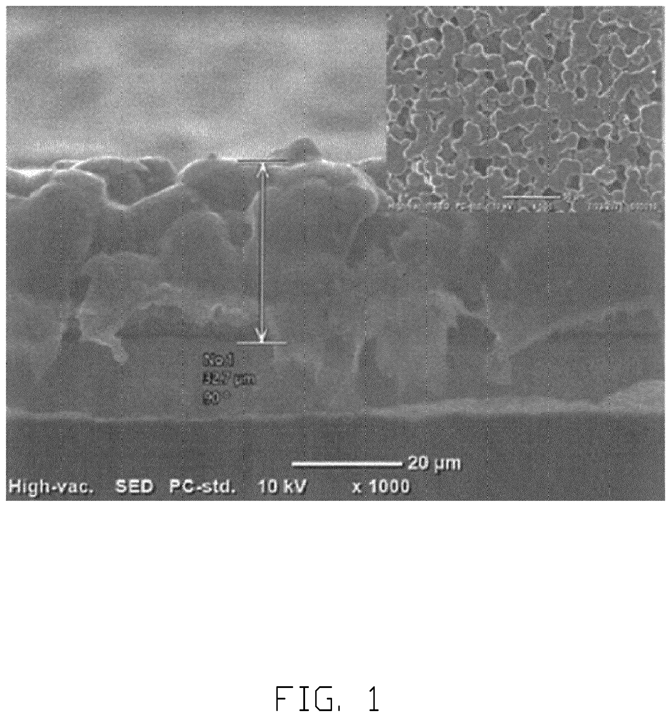

The anode passivation slurry was coated on the surface of an active material layer of an anode electrode with a coating thickness of about 30 µm, then the anode passivation slurry was dried. The scanning electron microscope (SEM) image of the dried anode electrode is shown in FIG. 1. The top right view of FIG. 1 is the top view of the anode coating formed after the anode passivation slurry is dried. It can be seen from FIG. 1 that the active material layer has been completely covered and protected by the anode coating.

### Example 2

The difference between Example 2 and Example 1 is that the ionic liquid in Example 2 is 1-octyl-3-methylimidazole bis(trifluoromethylsulfonyl)imide (OMIM-TFSI), the polymer material is a mixture of polyethylene oxide and polypyrrole in a mass ratio of 7:1, the mass percentage of IL@Cu-MOF in the anode passivation slurry is 5%, the mass percentage of lithium bis(trifluoromethanesulfonyl)imide (the second lithium salt) is 5%, and the mass percentage of the polymer material is 20%. The remainings are the same as those in Example 1, and are not repeated here.

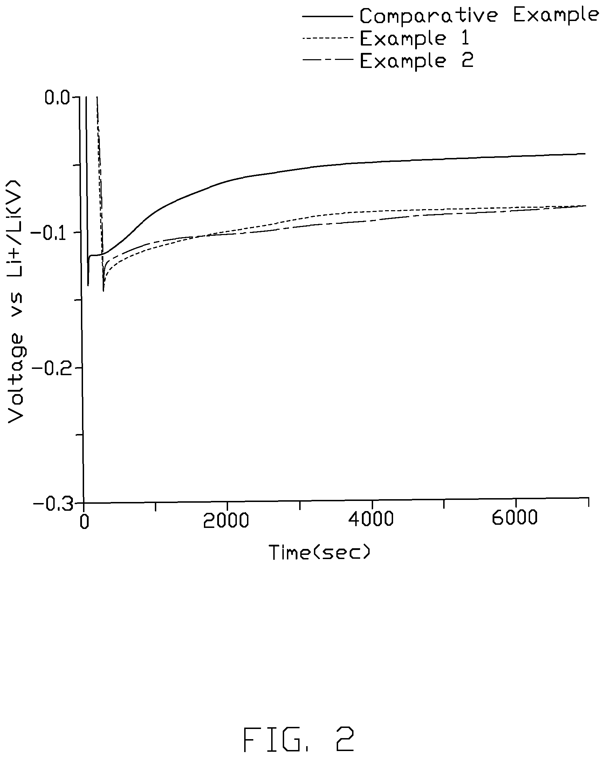

The anode passivation slurry prepared in each of Example 1 and Example 2 was coated on the surface of the active material layer of an anode electrode respectively with a coating thickness of 30 µm, and then the anode passivation slurry was dried. Next, the above-mentioned two anode electrodes are respectively combined with metallic lithium, a separator (which can be conventional or non-conventional separators in the field, which is not limited in this application), and an electrolyte (which can be conventional or non-conventional electrolytes in the field, which is not limited in this application) to form an anode-free half-cell, denoted accordingly as Example 1 and Example 2, respectively. An anode-free half-cell composed of a negative electrode current collector without the anode passivation slurry, metallic lithium, a separator, and an electrolyte was recorded as the Comparative Example. The half-cells of Example 1, Example 2, and the Comparative Example were respectively tested for voltage, and the test results are shown in FIG. 2.

As can be seen from FIG. 2, for the half-cell of the Comparative Example, the initial nucleation potential of the first cycle potential is about -0.145 V, the steady-state nucleation potential (that is, the lowest potential at 6500 s in FIG. 2) is about -0.045 V, and the overpotential (the difference between the steady-state nucleation potential and the initial nucleation potential) is about 100 mV. For the half-cells in Example 1 and Example 2, the initial nucleation potential is about -0.148 V, the steady-state nucleation potential is about -0.098V, and the overpotential is about 50 mV. It can be seen that the overpotential of the half-cell coated with the anode passivation slurry described in the present application is much lower than that of the half-cell without the anode passivation slurry coating.

The overpotential of the first cycle potential determines the nucleation and crystallization behavior of lithium metal during electrochemical deposition, and then affects the development morphology. The higher the overpotential, the more nucleation points of lithium metal there will be (lithiophobic surface), and the more intense the one-dimensional crystal growth, promoting the formation of lithium dendrites. On the contrary, the lower the overpotential, the fewer will be the nucleation points of lithium metal (lithiophilic surface), and the growth of crystal in all directions is not that limited by overpotential, so it will grow in two dimensions and suppress the formation of lithium dendrites in one dimensional form. The overpotential (50mV) of the half-cell coated with the anode passivation slurry described in the present application is smaller than the overpotential (100mV) of the half-cell without the coating of anode passivation slurry, indicating that the anode coating formed after the drying of the anode passivation slurry described in the present application effectively reduces the formation of lithium dendrites.

In the present application, during the synthesis of IL@Cu-MOF, nanopores compatible with anions (TFSI) are formed by micelle encapsulation formed by non-ionic polymers, and the pores can adsorb anions (TFSI⁻) to form nano-scale continuous channels, which homogenize the conduction concentration of lithium ions and improve the ionic conductivity, thus reducing the formation of lithium dendrites. In addition, the high stress of the anode coating formed by drying the anode passivation slurry prepared from IL@Cu-MOF can reduce damage caused by lithium dendrites to the battery structure and improve the cycle life of battery.

The above descriptions are some specific embodiments of the present application, but the actual application process cannot be limited only to these embodiments. For those of ordinary skill in the art, other modifications and changes made according to the technical concept of the present application should all belong to the protection scope of the present application.

## Claims

1. A method of preparing an anode passivation slurry, comprising:
dissolving a divalent copper metal compound and a non-ionic polymer in a first solvent to obtain a first solution, dissolving trimesic acid in the first solvent to obtain a second solution, mixing the second solution and the first solution and reacting at room temperature to obtain a precursor with a plurality of pores;
drying the precursor;
mixing an ionic liquid and a first lithium salt and then drying to obtain a mixture;
mixing the precursor after drying and the mixture uniformly, and baking at 100°C~150°C in a vacuum environment, so that anions in the mixture diffuse into the plurality of pores of the precursor to obtain an ionic liquid impregnated copper-based metal-organic framework; and
mixing the ionic liquid impregnated copper-based metal-organic framework, a second lithium salt, a polymer material, and a second solvent uniformly to obtain the anode passivation slurry.

2. The method of claim 1, **characterized in that**, the non-ionic polymer comprises at least one of polyvinyl alcohol, polyquaternium, and polyvinylpyrrolidone.

3. The method of claim 2, **characterized in that**, a molecular weight of the non-ionic polymer is 4,000 to 100,000, wherein a concentration of the non-ionic polymer in the mixed solution of the first solution and the second solution is 0.05 mM to 0.08 mM.

4. The method of any one of claims 1 to 3, **characterized in that**, the ionic liquid comprises at least one of 1-ethyl-3-methylimidazole bis(trifluoromethylsulfonyl)imide, 1-butyl-3-methylimidazole bis(trifluoromethylsulfonyl)imide, and 1-octyl-3-methylimidazole bis(trifluoromethylsulfonyl)imide.

5. The method of any one of claims 1 to 4, **characterized in that**, the first lithium salt includes at least one of lithium bis(trifluoromethanesulfonyl)imide, lithium bis(fluorosulfonyl)imide, lithium tetrafluoroborate, and lithium hexafluorophosphate.

6. The method of any one of claims 1 to 5, **characterized in that**, the second lithium salt includes at least one of lithium bis(trifluoromethanesulfonyl)imide, lithium bis(fluorosulfonyl)imide, lithium tetrafluoroborate, and lithium hexafluorophosphate.

7. The method of any one of claims 1 to 6, **characterized in that**, the polymer material comprises a mixture of a first macromolecule and a second macromolecule, the first macromolecule is selected from at least one of polyvinylidene fluoride and polyethylene oxide, and the second macromolecule is selected from at least one of polymethyl methacrylate, polypyrrole, and poly(2-ethyl-2-oxazoline).

8. The method of any one of claims 1 to 7, **characterized in that**, the first solvent comprises at least one of methanol, ethanol, and water.

9. The method of any one of claims 1 to 8, wherein the second solvent comprises at least one of N-methylpyrrolidone and N,N-dimethylacetamide.

10. The method of any one of claims 1 to 9, **characterized in that**, the divalent copper metal compound comprises at least one of copper nitrate, copper acetate, and copper sulfate.

11. An anode passivation slurry, **characterized in that**, the anode passivation slurry is prepared by the method according to any one of claims 1 to 10, and the anode passivation slurry comprises the following components by mass percentage:
the ionic liquid impregnated copper-based metal-organic framework 1-5 wt%;
the second lithium salt 5-20 wt%;
the polymer materials 10-20 wt%; and
the remainder is the second solvent.

12. The anode passivation slurry of claim 11, **characterized in that**, a particle size of the ionic liquid impregnated copper-based metal-organic framework is 0.1 µm to 0.7 µm.

13. The anode passivation slurry of claims 11 or 12, **characterized in that**, a specific surface area of the ionic liquid impregnated copper-based metal-organic framework is 700 m²/g to 1300 m²/g.

14. The anode passivation slurry of any one of claims 11 to 13, **characterized in that**, the ionic liquid impregnated copper-based metal-organic framework has a plurality of pores, and a size of the plurality of pores ranges from 0.6 nm to 1.6 nm.

15. A battery comprising an anode electrode, the anode electrode comprising:
a negative current collector;
a negative electrode active material layer disposed on a surface of the negative current collector; and
an anode coating disposed on a surface of the negative electrode active material layer, wherein the anode coating is dried from the anode passivation slurry according to any one of claims 1 to 14.

## Amended claims

### Amended claims in accordance with Rule 137(2) EPC.

1. A method of preparing an anode passivation slurry, comprising:
obtaining a precursor with a plurality of pores, **characterized in that**, the precursor is prepared by dissolving a divalent copper metal compound and a non-ionic polymer in a first solvent to obtain a first solution, dissolving trimesic acid in the first solvent to obtain a second solution, mixing the second solution and the first solution and reacting at room temperature, the non-ionic polymer comprises at least one of polyvinyl alcohol and polyvinylpyrrolidone, the first solvent comprises at least one of methanol, ethanol, and water;
drying the precursor;
mixing an ionic liquid and a first lithium salt and then drying to obtain a mixture;
mixing the precursor after drying and the mixture uniformly, and baking at 100°C~150°C in a vacuum environment, so that anions in the mixture diffuse into the plurality of pores of the precursor to obtain an ionic liquid impregnated copper-based metal-organic framework; and
mixing the ionic liquid impregnated copper-based metal-organic framework, a second lithium salt, a polymer material, and a second solvent uniformly to obtain the anode passivation slurry.

2. The method of claim 1, **characterized in that**, a molecular weight of the non-ionic polymer is 4,000 to 100,000, wherein a concentration of the non-ionic polymer in the mixed solution of the first solution and the second solution is 0.05 mM to 0.08 mM.

3. The method of any one of claims 1 to 2, **characterized in that**, the ionic liquid comprises at least one of 1-ethyl-3-methylimidazole bis(trifluoromethylsulfonyl)imide, 1-butyl-3-methylimidazole bis(trifluoromethylsulfonyl)imide, and 1-octyl-3-methylimidazole bis(trifluoromethylsulfonyl)imide.

4. The method of any one of claims 1 to 3, **characterized in that**, the first lithium salt includes at least one of lithium bis(trifluoromethanesulfonyl)imide, lithium bis(fluorosulfonyl)imide, lithium tetrafluoroborate, and lithium hexafluorophosphate.

5. The method of any one of claims 1 to 4, **characterized in that**, the second lithium salt includes at least one of lithium bis(trifluoromethanesulfonyl)imide, lithium bis(fluorosulfonyl)imide, lithium tetrafluoroborate, and lithium hexafluorophosphate.

6. The method of any one of claims 1 to 5, **characterized in that**, the polymer material comprises a mixture of a first macromolecule and a second macromolecule, the first macromolecule is selected from at least one of polyvinylidene fluoride and polyethylene oxide, and the second macromolecule is selected from at least one of polymethyl methacrylate, polypyrrole, and poly(2-ethyl-2-oxazoline).

7. The method of any one of claims 1 to 6, wherein the second solvent comprises at least one of N-methylpyrrolidone and N,N-dimethylacetamide.

8. The method of any one of claims 1 to 7, **characterized in that**, the divalent copper metal compound comprises at least one of copper nitrate, copper acetate, and copper sulfate.

9. An anode passivation slurry, **characterized in that**, the anode passivation slurry is prepared by the method according to any one of claims 1 to 8, and the anode passivation slurry comprises the following components by mass percentage:
the ionic liquid impregnated copper-based metal-organic framework 1-5 wt%;
the second lithium salt 5-20 wt%;
the polymer materials 10-20 wt%; and
the remainder is the second solvent.

10. The anode passivation slurry of claim 9, **characterized in that**, a particle size of the ionic liquid impregnated copper-based metal-organic framework is 0.1 µm to 0.7 µm.

11. The anode passivation slurry of claims 9 or 10, **characterized in that**, a specific surface area of the ionic liquid impregnated copper-based metal-organic framework is 700 m²/g to 1300 m²/g.

12. The anode passivation slurry of any one of claims 9 to 11, **characterized in that**, the ionic liquid impregnated copper-based metal-organic framework has a plurality of pores, and a size of the plurality of pores ranges from 0.6 nm to 1.6 nm.

13. A battery comprising an anode electrode, the anode electrode comprising:
a negative current collector;
a negative electrode active material layer disposed on a surface of the negative current collector; and
an anode coating disposed on a surface of the negative electrode active material layer, wherein the anode coating is dried from the anode passivation slurry according to any one of claims 1 to 12.
